Europäisches Patentamt

European Patent Office

Office européen des brevets

(11) Veröffentlichungsnummer: **0 444 284 A2**

## (12) EUROPÄISCHE PATENTANMELDUNG

(21) Anmeldenummer: 90124551.4

(22) Anmeldetag: 18.12.90

(51) Int. Cl.5: **E04F 13/14**, F16B 13/14, E04B 1/41

(30) Priorität: 26.02.90 DE 4005999

(43) Veröffentlichungstag der Anmeldung:
04.09.91 Patentblatt 91/36

(84) Benannte Vertragsstaaten:
AT BE CH DE DK ES FR GB IT LI NL

(71) Anmelder: fischerwerke Artur Fischer GmbH & Co. KG
Weinhalde 14 - 18
W-7244 Waldachtal 3/Tumlingen(DE)

(72) Erfinder: Fischer, Artur, Prof. Dr. h. c.
Weinhalde 34
W-7244 Waldachtal 3/Tumlingen(DE)

(54) In Bohrlöcher mit Hinterschneidung verankerbares Befestigungselement.

(57) 2.1 Zur Befestigung von Fassadenplatten können an deren Rückseite Bohrungen mit Hinterschneidung angebracht werden, in die Befestigungselemente formschlüssig einsetzbar sind.

2.2 Um eine Fassadenplatte direkt auf Mauerwerk befestigen zu können, wird ein Befestigungsele- ment vorgeschlagen, dessen Spreizelement ein die Rückseite der Fassadenplatte überragendes Schaftteil aufweist. Dieses Schaftteil ist mit Halte- mitteln versehen und zu seiner Verankerung in mit Mörtel gefüllte Bohrlöcher des Mauerwerks einsteckbar.

EP 0 444 284 A2

Die Erfindung betrifft ein in Bohrlöcher mit Hinterschneidung von Fassadenplatten verankerbares Befestigungselement gemäß der Gattung des Anspruches 1.

Es sind Befestigungselemente bekannt, deren Spreizelement an ihrem in ein Bohrloch einsetzbaren Ende einen Konus besitzen, auf den eine Spreizhülse aufschiebbar ist. Beim Aufschieben der Spreizhülse weitet sich diese auf und kann somit formschlüssig in eine Hinterschneidung des jeweiligen Bohrloches eingreifen.

Für die Befestigung von Fassadenplatten weist das Spreizelement ferner einen die Rückseite der Fassadenplatte überragenden Gewindeabschnitt auf, mit dem die Fassadenplatte an eine an einem Mauerwerk angebrachte Trägerkonstruktion befestigbar ist. Des öfteren besteht jedoch das Problem, die Fassadenplatte zur Sanierung oder Verkleidung von brüchigem Mauerwerk unmittelbar auf das Mauerwerk aufzubringen. Zur Befestigung und zum Ausgleich von durch Beschädigungen am Mauerwerk entstandenen Unebenheiten wird die Fassadenplatte in ein auf das Mauerwerk aufgebrachtes Mörtelbett gelegt. Durch Schlagregen, Witterungseinflüsse und dgl. kann sich jedoch der Mörtel von der Mauerwerksoberfläche ablösen und damit die Verkleidung mit Fassadenplatten zerstören.

Der Erfindung liegt die Aufgabe zugrunde, ein Befestigungselement zu schaffen, mit dem eine sichere und unmittelbar auf das Mauerwerk aufbringbare Befestigung von Fassadenplatten möglich ist.

Die Lösung dieser Aufgabe wird durch die im Anspruch 1 angegebenen Merkmale erreicht. Nach der Verankerung der Befestigungselemente in auf der Rückseite der Fassadenplatte eingebrachten hinterschnittenen Bohrlöchern wird die Fassadenplatte mit den überstehenden Schaftteilen der Spreizelemente an dem zu verkleidenden Mauerwerk befestigt. Zu diesem Zweck werden in das Mauerwerk entsprechend der Verteilung der Befestigungselemente zylindrische Bohrlöcher erstellt. Nach Säuberung der Außenfläche des Mauerwerks und Aufbringen eines Mörtelbettes, bei dem auch die Bohrlöcher des Mauerwerks mit Mörtel aufgefüllt werden, wird die Fassadenplatte auf das Mörtelbett gedrückt. Dabei dringen die Schaftteile in die mit Mörtel gefüllten Bohrlöcher des Mauerwerks ein und schaffen somit eine Verbindung zwischen Fassadenplatte und Mauerwerk. Durch die am Schaftteil angeordneten Haltemittel ergibt sich nach dem Aushärten des Mörtels eine dauerhafte, auch gegen extreme Umwelteinflüsse gesicherte Befestigung.

Die Haltemittel des Schaftteiles können als Vorsprünge, Kerben, umlaufende Rillen, wellenförmige Prägungen oder dgl. ausgebildet sein.

Um das Eindringen der Schaftteile in die mit Mörtel ausgefüllten Bohrlöcher des Mauerwerks zu erleichtern, sind die Schaftteile mit einer Spitze versehen. Diese Ausgestaltung ermöglicht ferner, beim Andrücken der Fassadenplatte an das Mauerwerk mit den Spitzen der Schaftteile, die Position der im Mauerwerk anzubringenden Bohrlöcher zu markieren.

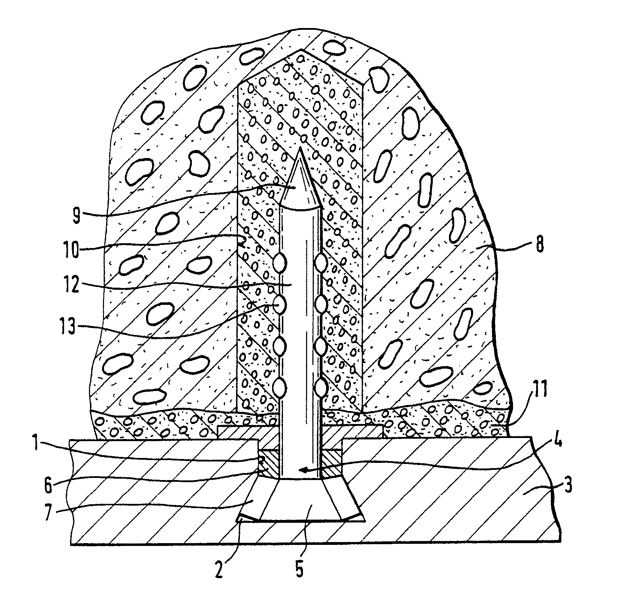

Die Erfindung wird nachfolgend anhand der Zeichnung näher erläutert.

Das in einem Bohrloch 1 mit Hinterschneidung 2 einer Fassadenplatte 3 verankerte Befestigungselement besteht aus einem Spreizelement 4 und einer auf den Spreizkonus 5 des Spreizelementes 4 auftreibbaren Spreizhülse 6. Beim Auftreiben der Spreizhülse 6 werden deren Spreizlamellen 7 in die Hinterschneidung 2 eingebogen, so daß eine nahezu spreizdruckfreie und formschlüssige Festsetzung des Spreizelementes 4 in der Fassadenplatte entsteht.

Zur Befestigung der Fassadenplatte 3 an dem Mauerwerk 8 weist die Fassadenplatte mehrere solcher festgesetzen Spreizelemente 4 auf. Mit den an den überstehenden Schaftteilen 12 der Spreizelemente 4 angeordneten Spitzen 9 werden an dem zu verkleidenden Mauerwerk durch Andrücken der Fassadenplatte Markierungen für die Bohrlöcher 10 angebracht. Nach Erstellung der Bohrlöcher 10 wird die Außenfläche des Mauerwerkes gesäubert und danach ein die Unebenheiten ausgleichendes Mörtelbett 11 aufgebracht. Dabei werden auch die Bohrlöcher 10 mit Mörtel ausgefüllt.

Zur Befestigung der Fassadenplatte 3 wird diese auf das Mörtelbett 11 aufgedrückt und gleichzeitig die Schaftteile 12 des Spreizelementes 4 in die Bohrlöcher 10 des Mauerwerks 8 eingeschoben. Nach dem Aushärten des Mörtels ergibt sich durch die am Schaftteil 12 angeordneten Haltemittel 13 zusätzlich zu der Mörtelverbindung an der Rückseite der Fassadenplatte 3 eine dauerhafte und sichere Befestigung.

**Patentansprüche**

1. In Bohrlöcher mit Hinterschneidung von Fassadenplatten verankerbares Befestigungselement, das durch ein Spreizelement mit Spreizkonus und einer auf dem Spreizkonus festsetzbaren Spreizhülse gebildet ist, und dessen Spreizelement ein die Rückseite der Fassadenplatte überragendes Schaftteil zur Befestigung an einem Mauerwerk aufweist, **dadurch gekennzeichnet,** daß das Schaftteil (12) mit Haltemitteln (13) versehen und zu seiner Verankerung in mit Mörtel (11) gefüllte Bohrlöcher (10) des Mauerwerks (8) einsteckbar ist.

2. Befestigungselement nach Anspruch 1, **dadurch gekennzeichnet,** daß die Haltemittel (13) des Schaftteiles als Vorsprünge, Kerben, umlaufende Rillen, wellenförmige Prägungen oder dgl. ausgebildet sind.

3. Befestigungselement nach Anspruch 1, **dadurch gekennzeichnet,** daß das Schaftteil (12) mit einer Spitze (9) versehen ist.